# EUROPEAN PATENT APPLICATION

(11) **EP 4 628 978 A1**
(43) Date of publication of application: **08.10.2025**
(21) Application number: 22967310.8
(22) Date of filing: 02.12.2022
(51) Int. Cl.: G02F 1/1335, G02F 1/13357, G02F 1/1333, H05K 9/00

(54) **DISPALY DEVICE**

(71) Applicant: LG Electronics Inc., Yeongdeungpo-gu Seoul 07336 (KR)
(72) Inventor: LEE, Kyonghoon, Seoul 06772 (KR); HWANG, Sangsoo, Seoul 06772 (KR); KIM, Jaebong, Seoul 06772 (KR)
(74) Representative: Schornack, Oliver
(86) International application number: PCT/KR2022/019540
(87) International publication number: WO 2024/117335

(57) **Abstract**

A display device is disclosed. The display device of the present disclosure may comprise: a display panel; a frame disposed at the rear of the display panel; a substrate disposed between the display panel and the frame and coupled to the frame; a light source mounted onto one surface of the substrate; and an antistatic part formed at one surface of the substrate and including a first antistatic portion disposed adjacent to the light source, wherein the first antistatic portion includes: a first pattern extending in one direction; and a second pattern connected to the first pattern and extending in a direction intersecting the first direction.

## Description

### [Technical Field]

The present disclosure relates to a display device.

### [Background Art]

With the development of information society, there has been a growing demand for various types of display devices. In order to meet such demand, various display devices, such as a liquid crystal display (LCD) device, a plasma display panel (PDP), an electro luminescent display (ELD), a vacuum fluorescent display (VFD), an organic light emitting diode (OLED) display, and the like, have been developed and used.

Among them, an LCD panel includes a TFT substrate and a color substrate that are opposite each other with a liquid crystal layer interposed therebetween, and can display an image using light provided from a backlight unit.

Recently, numerous research has been conducted on a structure for preventing static electricity from being introduced into a light source, such as LEDs, or an IC chip for controlling a plurality of light sources.

### [Disclosure]

### [Technical Problem]

It is therefore an object of the present disclosure to solve the above and other problems.

It is another object of the present disclosure to provide a structure that can prevent static electricity from being introduced into an LED and/or an IC chip.

It is another object of the present disclosure to provide a structure that can prevent static electricity from being introduced into an LED and/or an IC chip while maximizing an attachment area between a reflective sheet and a substrate.

It is another object of the present disclosure to provide a structure that can prevent static electricity from being introduced into a light source in various attachment directions of a reflective sheet.

It is another object of the present disclosure to provide a heat dissipation structure that can prevent heat generation due to prolonged use of a high-brightness screen.

### [Technical Solution]

In accordance with an aspect of the present disclosure, the above and other objects can be accomplished by providing a display device including: a display panel; a frame disposed behind the display panel; a substrate disposed between the display panel and the frame and coupled to the frame; a light source mounted on one surface of the substrate; and an electrostatic protection part formed on the one surface of the substrate, the electrostatic protection part including a first electrostatic protection part disposed adjacent to the light source, wherein the first electrostatic protection part includes: a first pattern extending in one direction; and a second pattern connected to the first pattern and extending in a direction intersecting the one direction.

### [Advantageous Effects]

A display device according to the present disclosure has the following effects.

According to at least one of the embodiments of the present disclosure, it is possible to provide a structure capable of preventing static electricity from being introduced into an LED and/or an IC chip.

According to at least one of the embodiments of the present disclosure, it is possible to provide a structure capable of preventing static electricity from being introduced into an LED and/or an IC chip while maximizing an attachment area between a reflective sheet and a substrate.

According to at least one of the embodiments of the present disclosure, it is possible to provide a structure capable of preventing static electricity from being introduced into a light source in various attachment directions of a reflective sheet.

According to at least one of the embodiments of the present disclosure, it is possible to provide a heat dissipation structure capable of preventing heat generation due to prolonged use of a high-brightness screen.

Further scope of applicability of the present disclosure will become apparent from the following detailed description. However, it should be understood that the detailed description and specific embodiments such as preferred embodiments of the present disclosure are given by way of example only, since various changes and modifications within the idea and scope of the present disclosure may be clearly understood by those skilled in the art.

### [Brief Description of Drawings]

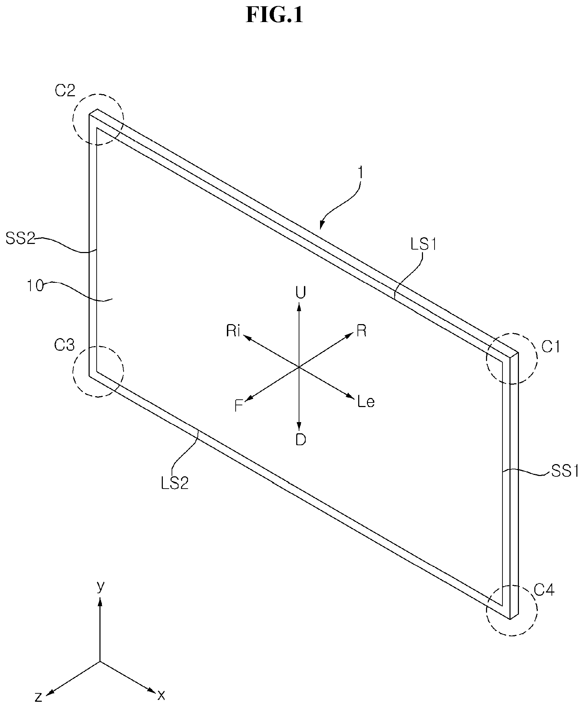

FIGS. 1 to 14 are diagrams illustrating examples of a display device according to embodiments of the present disclosure.

### [Mode for the Invention]

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In the following description, a suffix such as "module" and "unit" may be used to refer to elements or components. Use of such a suffix herein is merely intended to facilitate description of the specification, and the suffix itself is not intended to give any special meaning or function.

In the present disclosure, that which is well known to one of ordinary skill in the relevant art has generally been omitted for the sake of brevity. The accompanying drawings are used to help easily understand various technical features and it should be understood that the embodiments disclosed herein are not limited by the accompanying drawings. As such, the present disclosure should be construed to extend to any alterations, equivalents, and substitutes in addition to those which are particularly set out in the accompanying drawings.

Although the terms "first", "second", etc. may be used herein to describe various elements, these elements should not be limited by these terms. These terms are only used to distinguish one element from another.

It will be understood that when a component is referred to as being "coupled" or "connected" to another component, it may be directly coupled or connected to another component, or intervening components may be present. In contrast, when a component is referred to as being "directly coupled" or "directly connected" to another component, there are no intervening components present.

A singular representation may include a plural representation unless the context clearly indicates otherwise.

Terms such as "comprises or includes" or "has" are used herein and should be understood that they are intended to indicate an existence of features, numbers, steps, operations, elements, components, or combinations thereof, disclosed in the specification, but do not preclude the presence or addition of one or more other features, numbers, steps, operations, elements, components, or combinations thereof.

The directions "up (U)", "down (D)", "left (Le)", "right (Ri)", "front (F)", and "rear (R)" shown in the drawings are used only for convenience of description, and the technical concept disclosed in this specification is not limited by these directions.

Referring to FIG. 1, a display device 1 may include a display panel 10. The display panel 10 may display a screen. The display panel 10 may display an image.

The display device 1 may include a first long side LS1, a second long side LS2 opposite the first long side LS1, a first short side SS1 adjacent to the first long side LS1 and the second long side LS2, and a second short side SS2 opposite the first short side SS1. For ease of explanation, it is illustrated and described that lengths of the first and second long sides LS1 and LS2 are greater than lengths of the first and second short sides SS1 and SS2. However, the lengths of the first and second long sides LS1 and LS2 may be substantially equal to the lengths of the first and second short sides SS1 and SS2.

A direction parallel to the long sides LS1 and LS2 of the display device 1 may be referred to as a left-right direction (Ri, Le). A direction parallel to the short sides SS1 and SS2 of the display device 1 may be referred to as an up-down direction (U, D). A direction perpendicular to the long sides LS1 and LS2 and the short sides SS1 and SS2 of the display device 1 may be referred to as a front-rear direction (F, R).

A direction in which the display panel 10 displays an image may be referred to as a front (F, z), and a direction opposite to the front may be referred to as a rear (R). The first long side LS1 may be referred to as an upper side (U, y). The second long side LS2 may be referred to as a lower side (D). The first short side SS1 may be referred to as a left side (Le, x). The second short side SS2 may be referred to as a right side (Ri).

The first long side LS1, the second long side LS2, the first short side SS1, and the second short side SS2 may be referred to as edges of the display device 1. In addition, points where the first long side LS1, the second long side LS2, the first short side SS1, and the second short side SS2 meet one another may be referred to as corners. For example, a point where the first long side LS1 and the first short side SS1 meet may be referred to as a first corner C1; a point where the first long side LS1 and the second short side SS2 meet may be referred to as a second corner C2; a point where the second long side LS2 and the second short side SS2 meet may be referred to as a third corner C3; and a point where the second long side LS2 and the first short side SS1 meet may be referred to as a fourth corner C4.

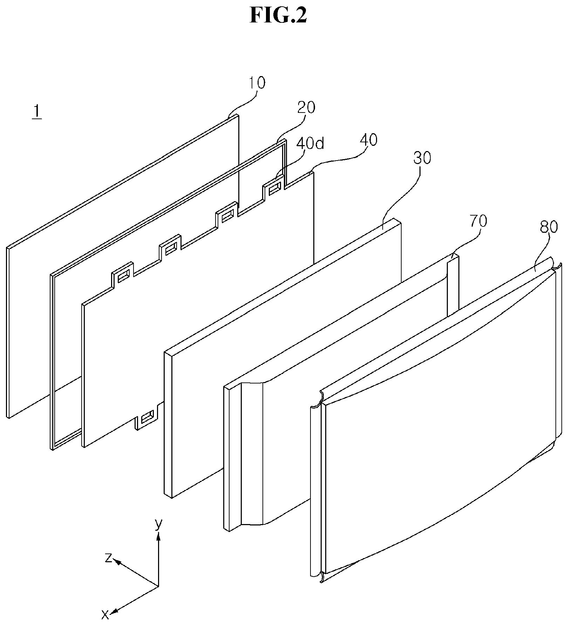

Referring to FIG. 2, the display device 1 may include a display panel 10, a guide panel 20, a backlight unit (30, 40), a frame 70, and a back cover 80.

The display device 1 may further include a front cover. The front cover may cover at least a portion of a front surface and a lateral surface of the display panel 10. The front cover may be divided into a front cover disposed on the front surface of the display panel 10, and a side cover disposed on the lateral surface of the display panel 10. The front cover and the side cover may be provided separately. Any one of the front cover and the side cover may be omitted.

The display panel 10 may define the front surface of the display device 1 and may display an image. The display panel 10 may display an image in such a manner that each of a plurality of pixels outputs red, green or blue (RGB) light in accordance with timing. The display panel 10 may be divided into an active area in which an image is displayed and a de-active area in which no image is displayed. The display panel 10 may include a front substrate and a rear substrate that are opposite each other with a liquid crystal layer interposed therebetween. The display panel 10 may be referred to as an LCD panel.

The front substrate may include a plurality of pixels, each of which consists of red, green, and blue sub-pixels. The front substate may output light corresponding to red, green or blue color in response to a control signal.

The rear substrate may include switching elements. The rear substrate may switch a pixel electrode. For example, the pixel electrode may change the molecular arrangement of a liquid crystal layer in response to a control signal input from the outside. The liquid crystal layer may include liquid crystal molecules. The arrangement of liquid crystal molecules may be changed according to a voltage difference between the pixel electrode and a common electrode. The liquid crystal layer may transmit light provided from the backlight unit (30, 40) to the front substrate or block the light.

The guide panel 20 may be positioned at the rear of the display panel 10. The guide panel 20 may support a portion of the display panel 10. The guide panel 20 may extend along a periphery of the display panel 10. The guide panel 20 may cover the lateral surface of the display panel 10. The guide panel 20 may be coupled to the display panel 10. The guide panel 20 may be coupled to a frame 70 described later. The guide panel 20 may support the display panel 10. The guide panel 20 may be referred to as a side frame or a middle cabinet.

The backlight unit (30, 40) may be positioned at the rear of the display panel 10. The backlight unit (30, 40) may be positioned at the front of the frame 70. The backlight unit (30, 40) may be coupled to the frame 70. The backlight unit (30, 40) may be driven by a full driving scheme or a partial driving scheme. For example, the backlight unit (30, 40) may be driven by a partial driving scheme such as local dimming or impulsive driving. The backlight unit (30, 40) may include an optical sheet 40 and an optical layer 30.

The optical sheet 40 may allow light from the light source to be uniformly transmitted to the display panel 10. The optical sheet 40 may consist of a plurality of layers. For example, the optical sheet 40 may include a prism sheet, a diffusion sheet, and the like.

The optical sheet 40 may include a coupling portion 40d. The coupling portion 40d may be coupled to the front cover, the frame 70, and/or the back cover 80. The coupling portion 40d may be coupled to a structure disposed on the front cover, the frame 70, and/or the back cover 80.

The frame 70 may be positioned behind the display panel 10. The frame 70 may support some components of the display panel 10. For example, a printed circuit board (PCB) on which a plurality of electronic elements (or components) are mounted may be coupled or fixed to the frame 70. The frame 70 may include a metal material such as stainless steel, aluminum alloy, electro galvanized coil (EGI), etc. The frame 70 may be referred to as a main frame, a module cover, or a cover bottom.

The back cover 80 may be positioned at the rear of the frame 70. The back cover 80 may cover the rear of the frame 70. The back cover 80 may be coupled to the frame 70. For example, the back cover 80 may include a metal material. For example, the back cover may be an injection-molded part made of a resin material. The back cover 80 may define the rear surface of the display device 1.

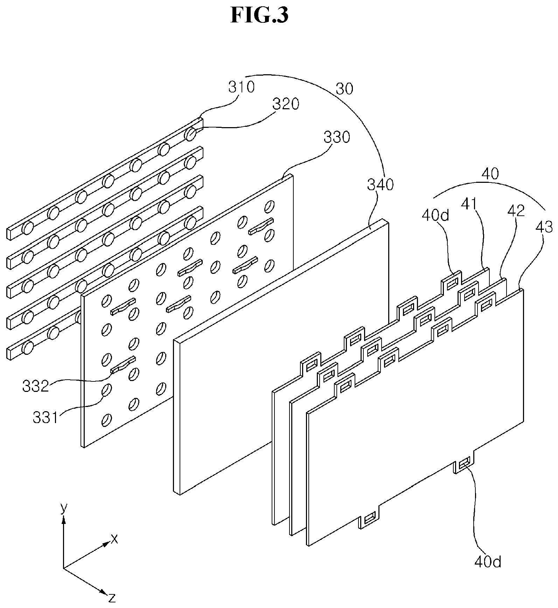

Referring to FIG. 3, the backlight unit (30, 40) may include an optical layer 30, and an optical sheet 40 positioned at the front of the optical layer 30.

The optical layer 30 may include a substrate 310. For example, the substrate 310 may be provided in the form of a plurality of straps that extend in the left-right direction (Le, Ri) and are spaced apart from each other in the up-down direction (U, D). As another example, the substrate 310 may be provided in the form of a rectangular plate. At least one light assembly 320 to be described later may be mounted on the substrate 310. The substrate 310 may be provided with an electrode pattern for connecting an adapter and the light assembly 320. For example, a carbon nanotube (CNT) electrode pattern may be formed on the substrate 310 to connect the light assembly 320 and the adapter. The substrate 310 may be made of at least one of polyethylene terephthalate (PET), glass, polycarbonate (PC), and silicon. The substrate 310 may be a printed circuit board (PCB).

The optical layer 30 may include at least one light assembly 320. The light assembly 320 may provide light forward. The light assembly 320 may provide light to the display panel 10. The light assembly 320 may be a light emitting diode (LED) chip or an LED package including at least one LED chip. The light assembly 320 may consist of a colored LED that emits at least one of red, green and blue light, or a white LED. The colored LED may include at least one of a red LED, a green LED, and a blue LED.

The optical layer 30 may include a reflective sheet 330. The reflective sheet 330 may be positioned at the front of the substrate 310. The reflective sheet 330 may be disposed between the substrate 310 and a diffusion plate 340 (to be described later). The reflective sheet 330 may be provided on a front surface of the substrate 310. The reflective sheet 330 may be coupled to the front surface of the substrate 310.

The reflective sheet 330 may include a hole 331 in which the light assembly 320 is positioned. A plurality of holes 331 may be provided. The reflective sheet 330 may be made of a reflective material. The reflective sheet 330 may include at least one of a metal and a metal oxide. For example, the reflective sheet 330 may include a metal and/or a metal oxide having a high reflectance such as at least one of aluminum (Al), silver (Ag), gold (Au), and titanium dioxide (TiO₂). For example, resin may be deposited on or applied to the reflective sheet 330. The reflective sheet 330 may reflect light, which is emitted from the light assembly 320 or reflected from the diffusion plate 340, forward.

The optical layer 30 may include a diffusion plate 340. The diffusion plate 340 may diffuse and/or reflect light emitted from the light assembly 320. The diffusion plate 340 may be disposed between the reflective sheet 330 and the optical sheet 40. The diffusion plate 340 may be spaced forward from the reflective sheet 330.

A supporter 332 may be disposed between the diffusion plate 340 and the reflective sheet 330. One end of the supporter 332 may be fixed to the reflective sheet 330. The other end of the supporter 332 may support the diffusion plate 340. The diffusion plate 340 may be spaced apart from the reflective sheet 330 by the supporter 332.

An air gap may be formed between the reflective sheet 330 and the diffusion plate 340. The air gap may serve as a buffer. Light emitted from the light assembly 320 may be spread widely by the air gap.

The optical sheet 40 may be positioned at the front of the diffusion plate 340. The optical sheet 40 and the display panel 10 may be disposed opposite each other with respect to the guide panel 20. The optical sheet 40 may be adjacent to or in contact with a front surface of the diffusion plate 340. The optical sheet 40 may consist of a plurality of sheets. For example, the optical sheet 40 may include a plurality of optical sheets 40 having different functions. For example, the optical sheet 40 may include one or more prism sheets and/or one or more diffusion sheets. The plurality of optical sheets 40 may be attached to each other or in close contact with each other. For example, the optical sheet 40 may include a first optical sheet 41, a second optical sheet 42, and a third optical sheet 43. For example, the first optical sheet 41 may be a diffusion sheet, and the second optical sheet 42 and the third optical sheet 43 may be prism sheets. The diffusion sheet 41 may prevent light from the diffusion plate 340 from being partially concentrated, thereby achieving more uniform distribution of light. The prism sheets 42 and 43 may collect light from the diffusion plate 340 and provide the light to the display panel 10. Meanwhile, the number and/or position of diffusion sheets and prism sheets may vary.

The coupling portion 40d of the optical sheet 40 may be coupled to the frame 70 and/or the back cover 80. The coupling portion 40d may be formed at each of the plurality of optical sheets 40 (41, 42, and 43). The coupling portion 40d may be formed on at least one of upper and lower sides of the optical sheet 40.

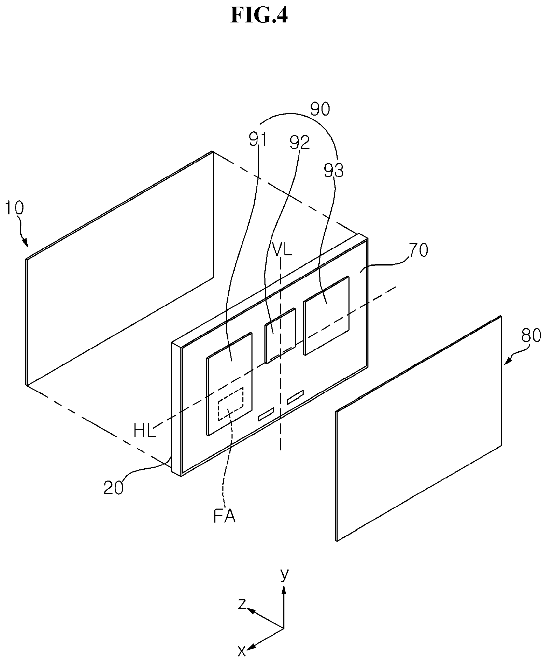

Referring to FIG. 4, boards 90 may be coupled to the frame 70 at the rear of the frame 70. The board 90 may include a plurality of electronic elements. The board 90 may be a printed circuit board (PCB), and may be electrically connected to electronic components of the display device 10.

The boards 90 may include a power supply board 91 configured to provide power to each component of the display device 1, a timing controller board 92 configured to provide an image (or video) signal to the display panel 10, and a main board 93 configured to control the display device 1.

For example, the power supply board 91 may be adjacent to a left side of the frame 70. The main board 93 may be adjacent to a right side of the frame 70. The timing controller board 92 may be disposed between the power supply board 91 and the main board 93.

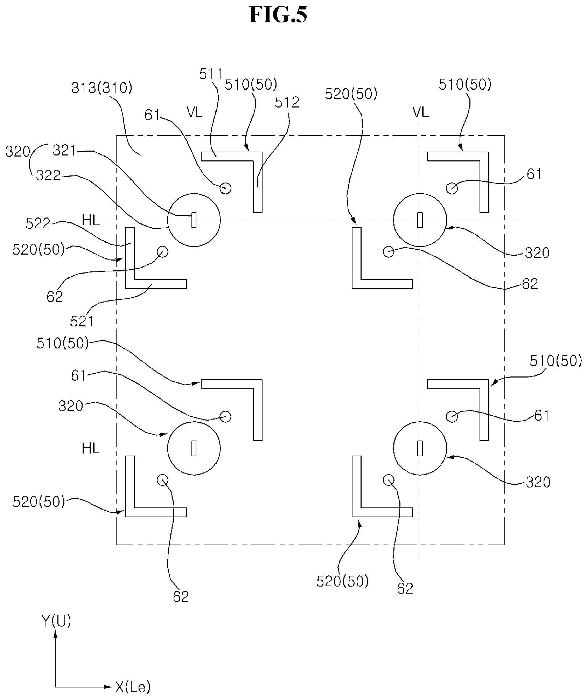

Referring to FIG. 5, the light assembly 320 may include a light source 321. A plurality of light sources 321 may be provided. The plurality of light sources 321 may be mounted on the substrate 310. The plurality of light sources 321 may be spaced apart from each other on the substrate 310. The plurality of light sources 321 may be spaced apart from each other in rows and columns on the substrate 310. The rows may be defined in the left-right direction (or horizontal direction), and the columns may be defined in the up-down direction (or vertical direction). The plurality of light sources 321 may be spaced apart from each other at equal intervals in the left-right direction. The plurality of light sources 321 may be spaced apart from each other at equal intervals in the up-down direction. For example, the light source 321 may be a light emitting diode (LED) chip or an LED package including at least one LED chip. For example, the light source 321 may be a colored LED that emits at least one of red, blue and green light, or a white LED. The light source 321 may be a mini-LED.

The light assembly 320 may include a lens 322. The lens 322 may cover the light source 321. For example, the lens 322 may have a substantially hemispherical shape. The lens 322 may include at least one of silicone, polymethyl methacrylate (PMMA), and polycarbonate (PC). Light provided by the light source 321 may be refracted or reflected by the lens 322 and then be spread to a beam angle wider than that of the light source 321. In addition, a sufficient amount of light may be secured in a wide range relative to the number and position of the light sources 321. A plurality of lenses 322 may be provided. The plurality of lenses 322 may cover the plurality of light sources 321, respectively.

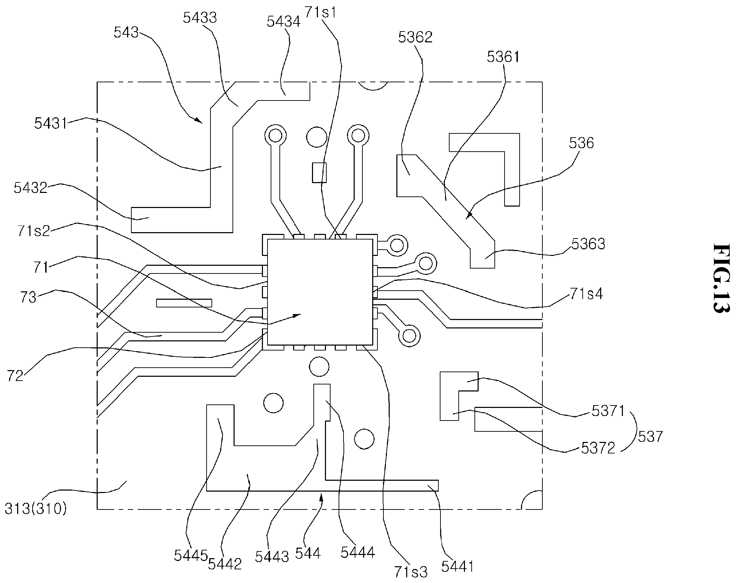

An electrostatic protection part (or antistatic part) 50 may be formed on the substrate 310. The electrostatic protection part 50 may include a first electrostatic protection part 510 formed adjacent to the light source 321 and/or the light assembly 320. The first electrostatic protection part 510 may include a first ground pattern (511, 512). The first ground pattern (511, 512) may be connected to a ground line formed on a conductive layer 312 (see FIG. 13) of the substrate 310. Accordingly, static electricity absorbed or introduced into the first ground pattern (511, 512) may be grounded through the ground line.

The electrostatic protection part 50 may include a second electrostatic protection part 520 formed adjacent to the light source 321 and/or the light assembly 320. The second electrostatic protection part 520 may include a second ground pattern (521, 522). The second ground pattern (521, 522) may be connected to a ground line formed on the conductive layer 312 (see FIG. 13) of the substrate 310. Accordingly, static electricity absorbed or introduced into the second ground pattern (521, 522) may be grounded through the ground line.

The first electrostatic protection part 510 and the second electrostatic protection part 520 may be provided in the vicinity of one light source 321. The second electrostatic protection part 520 and the first electrostatic protection part 510 may be disposed opposite each other with respect to the light source 321. The first electrostatic protection part 510 and the second electrostatic protection part 520 may be provided as a pair for one light source 321. That is, each of the plurality of light sources 321 may be provided with the first electrostatic protection part 510 and the second electrostatic protection part 520. However, the present disclosure is not limited thereto, and each of the plurality of light sources 321 may be provided with any one of the first electrostatic protection part 510 and the second electrostatic protection part 520.

Electrostatic discharge (ESD) may occur during the assembly process of the backlight unit (30, 40). Static elasticity may be generated by friction between the reflective sheet 330 and the substrate 310 when the reflective sheet 330 (see FIG. 3) is attached to the substrate 310. The electrostatic protection part 50 may prevent static elasticity from being introduced into the light assembly 320 and/or the light source 321. Accordingly, it is possible to prevent the light assembly 320 and/or the light source 321 from being damaged.

When the display device 1 is used for a long period of time, the light source 321 may generate heat, which may cause damage or destruction of the light source 321 or a change in electrical properties of the light assembly 320. In this case, the heat generated from the light source 321 may be discharged to the outside through the electrostatic protection part 50. Accordingly, it is possible to prevent damage to the light source 321 and/or the light assembly 320.

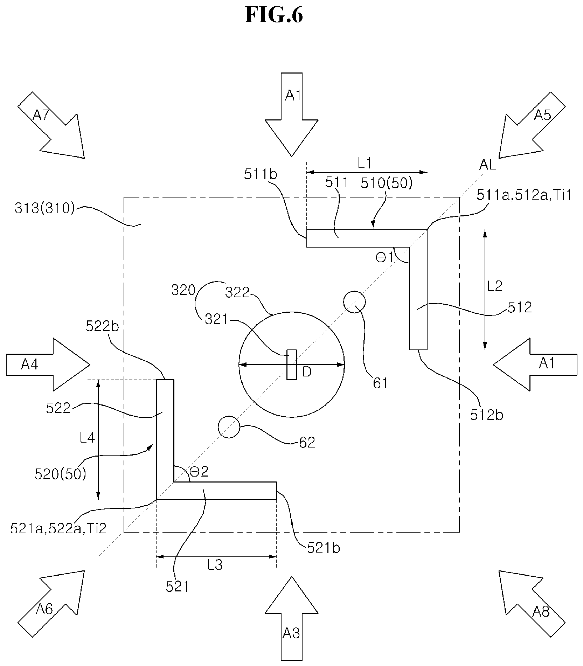

Referring to FIG. 6 along with FIG. 5, the first ground pattern (511, 512) of the first electrostatic protection part 510 may include a first pattern 511. The first pattern 511 may be located on one side of a vertical center line VL connecting the centers of the plurality of light sources 321 in the up-down direction (U, D). The first pattern 511 may be located on one side of a horizontal center line HL connecting the centers of the plurality of light sources 321 in the left-right direction (Le, Ri). For example, the first pattern 511 may be located on the left side (Le) of the vertical center line VL and on the upper side (U) the horizontal center line H_{L}.

The first ground pattern (511, 512) of the first electrostatic protection part 510 may include a second pattern 512. The second pattern 512 may be located on one side of the vertical center line VL connecting the centers of the plurality of light sources 321 in the up-down direction (U, D). The second pattern 512 may be located on one side of the horizontal center line HL connecting the centers of the plurality of light sources 321 in the left-right direction (Le, Ri). For example, the second pattern 512 may be located on the left side (Le) of the vertical center line VL and on the upper side (U) of the horizontal center line HL.

The first pattern 511 may extend in one direction. For example, the first pattern 511 may extend in the left-right or horizontal direction. The first pattern 511 may include a first end 511a and a second end 511b that is positioned on the opposite side of the first end 511a in the horizontal direction. The second end 511b may be located closer to the light source 321 than the first end 511a.

The second pattern 512 may be connected to the first pattern 511, and may extend in a direction intersecting a longitudinal direction of the first pattern 511. The second pattern 512 may be connected to the first end 511a of the first pattern 511, and may extend from the first end 511a of the first pattern 511 in a direction intersecting the longitudinal direction of the first pattern 511. For example, the second pattern 512 may extend in the up-down or vertical direction.

The second pattern 512 may include a third end 512a that is connected to the first end 511a of the first pattern 511 and a fourth end 512b that is positioned on the opposite side of the third end 512a in the vertical direction. The fourth end 512b may be located closer to the light source 321 than the third end 512a.

For example, the first pattern 511 and the second pattern 512 together may form a reverse L-shape (' 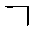 ' shape).

The first pattern 511 and the second pattern 512 may form a first angle (theta 1). For example, the first angle (theta 1) may be approximately 90 degrees or an acute angle close to 90 degrees. The first end 511a of the first pattern 511 and the first end 512a of the second pattern 512 may meet to form a first tip Ti1. The first tip Ti1 may be a pointy portion. Since electrostatic discharge (ESD) is easily induced at pointy portions, static electricity or (or electrostatic charge) may be more easily guided to the first ground pattern (511, 512) via the first tip Ti1 of the first ground pattern (511, 512). Accordingly, it is possible to prevent static electricity from being introduced into the light source 321, thereby preventing damage or destruction of the light source 321.

The second ground pattern (521, 522) of the second electrostatic protection part 520 may include a fifth pattern 521. The fifth pattern 521 may be located on the other side of the vertical center line VL with respect to the first and second patterns 511 and 512. The fifth pattern 521 may be located on the other side of the horizontal center line HL with respect to the first and second patterns 511 and 512. For example, the fifth pattern 521 may be located on the right side (Ri) of the vertical center line VL and on the lower side (D) of the horizontal center line HL.

The second ground pattern (521, 522) of the second electrostatic protection part 520 may include a sixth pattern 522. The sixth pattern 522 may be located on the other side of the vertical center line VL with respect to the first and second patterns 511 and 512. The sixth pattern 522 may be located on the other side of the horizontal center line HL with respect to the first and second patterns 511 and 512. For example, the sixth pattern 522 may be located on the right side (Ri) of the vertical center line VL and on the lower side (D) of the horizontal center line HL.

The fifth pattern 521 may extend in one direction. The fifth pattern 521 may extend in a direction parallel to the longitudinal direction of the first pattern 511. For example, the fifth pattern 521 may extend in the horizontal direction. The fifth pattern 521 may not vertically overlap the first pattern 511. The fifth pattern 521 may include a first end 521a and a second end 521b that is positioned on the opposite side of the first end 521a in the horizontal direction. The second end 521b may be located closer to the light source 321 than the first end 521a.

The sixth pattern 522 may be connected to the fifth pattern 521, and may extend in a direction intersecting a longitudinal direction of the fifth pattern 521. The sixth pattern 522 may be connected to the first end 521a of the fifth pattern 521, and may extend from the first end 521a of the fifth pattern 521 in a direction intersecting the longitudinal direction of the sixth pattern 521. For example, the sixth pattern 522 may extend in the vertical direction.

The sixth pattern 522 may include a third end 522a that is connected to the first end 521a of the fifth pattern 521 and a fourth end 522b that is positioned on the opposite side of the third end 522a in the vertical direction. The fourth end 522b may be located closer to the light source 321 than the third end 522a.

For example, the fifth pattern 521 and the sixth pattern 522 together may form an L-shape (' 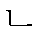 ' shape).

The fifth pattern 521 and the sixth pattern 522 may form a second angle (theta 2). For example, the second angle (theta 2) may be approximately 90 degrees or an acute angle close to 90 degrees. The first end 521a of the fifth pattern 521 and the second end 522a of the sixth pattern 522 may meet to form a second tip Ti2. The second tip Ti2 may be a pointy portion. Since electrostatic discharge (ESD) is easily induced at pointy portions, static electricity (or electrostatic charge) may be more easily guided to the second ground pattern (521, 522) via the second tip Ti2 of the second ground pattern (521, 522). Accordingly, it is possible to prevent static electricity from being introduced into the light source 321, thereby preventing damage or destruction of the light source 321.

A first test point 61 may be positioned adjacent to the light source 321. The first test point 61 may be formed between the light source 321 and the first ground pattern (511, 512). A second test point 62 may be adjacent to the light source 321. The second test point 62 may be formed between the light source 321 and the second ground pattern (521, 522). The second test point 62 and the first test point 61 may be disposed opposite each other with respect to the light source 321. The first and second test points 61 and 62 may be formed to test whether the light source 321 is mounted on the substrate 310. For example, a surface mounter technology (SMT) testing on the light source 321 may be performed using the first and second test points 61 and 62.

The first test point 61 may be located on an imaginary straight line AL connecting the light source 321 and the first tip Ti1. The first test point 61 may be surrounded by the first ground pattern (511, 512). The second test point 62 may be located on an imaginary straight line AL connecting the light source 321 and the second tip Ti2. The second test point 62 may be surrounded by the second ground pattern (521, 522). Accordingly, static electricity may flow in through the first and/or second test points 61 and 62, thereby preventing the light source 321 and/or the IC chip 71 from being damaged or destroyed.

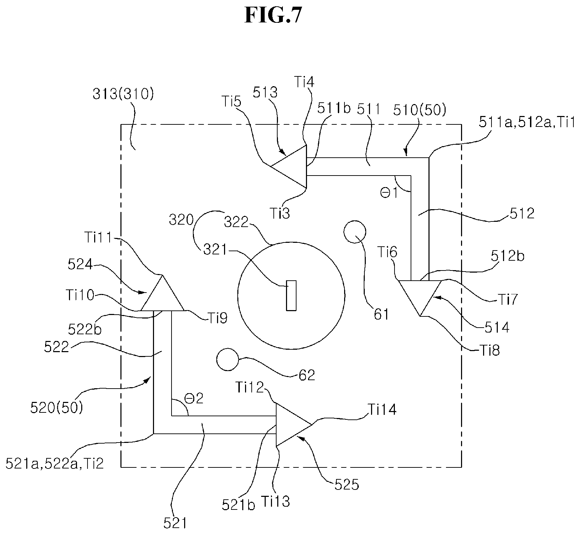

Referring to FIG. 7, the first electrostatic protection part 510 may further include a third pattern 513. The third pattern 513 may be connected to the first pattern 511. The third pattern 513 may be formed at the second end 511b of the first pattern 511. The third pattern 513 may include at least one tip (pointy portion) Ti3, Ti4, Ti5. The third pattern 513 may be formed in a polygonal shape having a plurality of tips. For example, the third pattern 513 may be formed in a triangular shape including three tips Ti3, Ti4, and Ti5.

The first electrostatic protection part 510 may further include a fourth pattern 514. The fourth pattern 514 may be connected to the second pattern 512. The fourth pattern 514 may be formed at the second end 512b of the second pattern 512. The fourth pattern 514 may include at least one tip (pointy portion) Ti6, Ti7, Ti8. The fourth pattern 514 may be formed in a polygonal shape having a plurality of tips. For example, the fourth pattern 514 may be formed in a triangular shape including three tips Ti6, Ti7, and Ti8.

The second electrostatic protection part 520 may further include a seventh pattern 523. The seventh pattern 523 may be connected to the fifth pattern 521. The seventh pattern 523 may be formed at the second end 521b of the fifth pattern 521. The seventh pattern 523 may include at least one tip (pointy portion) Ti9, Ti10, Ti11. The seventh pattern 523 may be formed in a polygonal shape having a plurality of tips. For example, the seventh pattern 523 may be formed in a triangular shape including three tips Ti9, Ti10, and Ti11.

The second electrostatic protection part 520 may further include an eighth pattern 524. The eighth pattern 524 may be connected to the sixth pattern 522. The eighth pattern 524 may be formed at the second end 522b of the sixth pattern 522. The eighth pattern 524 may include at least one tip (pointy portion) Ti12, Ti13, Ti14. The eighth pattern 524 may be formed in a polygonal shape having a plurality of tips. For example, the eighth pattern 524 may be formed in a triangular shape including three tips Ti12, Ti13, and Ti14.

The electrostatic protection part 50 may include the plurality of tips Ti1, Ti2, Ti3, Ti4, Ti5, Ti6, Ti7, Ti8, Ti9, Ti10, Ti11, Ti12, Ti13, and Ti14, thereby allowing static electricity to flow more easily into the electrostatic protection part 50. Accordingly, it is possible to prevent static electricity from being introduced into the light source 321.

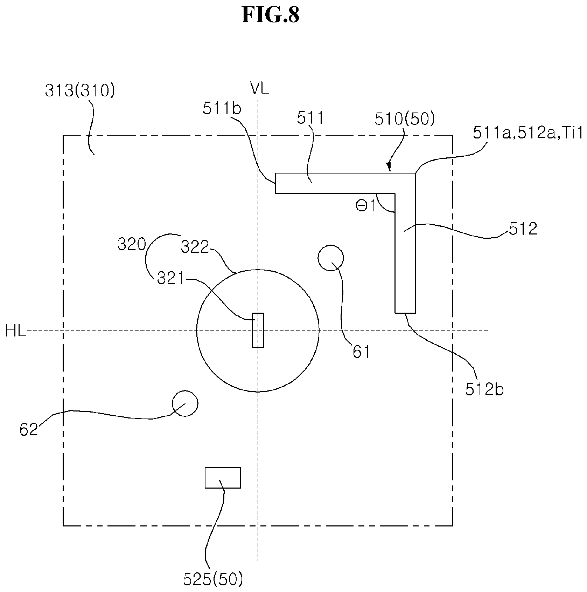

Referring to FIG. 8, the electrostatic protection part 50 may include a third ground pattern 525 instead of the second ground pattern 521, 522. That is, the electrostatic protection part 50 may include the first ground pattern 511, 512 and the third ground pattern 525. The third ground pattern 525 may be located on the left side of the vertical center line VL and on the lower side of the horizontal center line HL. The third ground pattern 525 may be formed in a square shape. The third ground pattern 525 may be formed in a bar or rectangular shape extending in a direction parallel to the longitudinal direction of the first pattern 511. Alternatively, the third ground pattern 525 may be formed in a bar or rectangular shape extending in a direction parallel to a longitudinal direction of the second pattern 511.

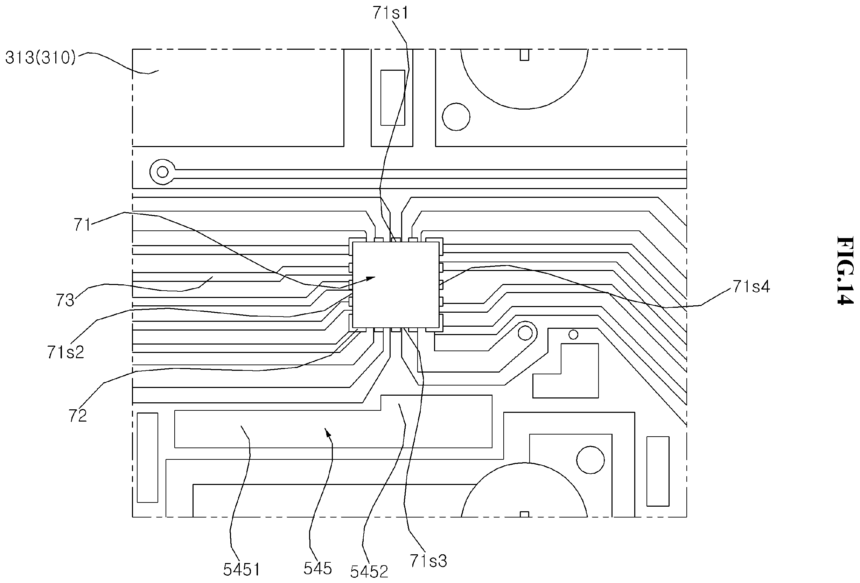

The third ground pattern 525 may be used when there is not enough space for forming the first or second ground pattern (511, 512, 521, 522) as signal lines 73 (see FIG. 14) are densely arranged on the substrate 310.

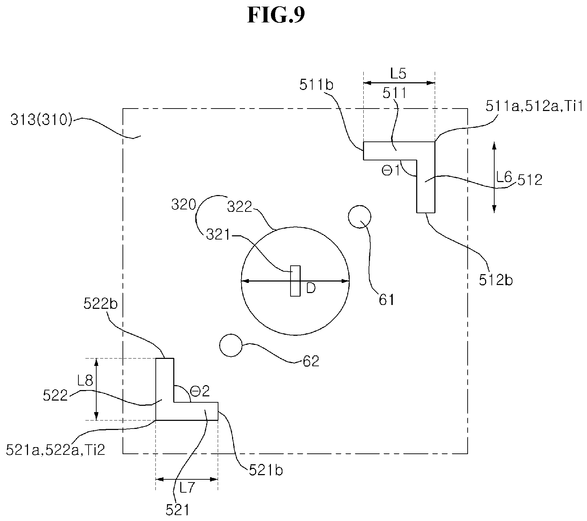

Referring to FIG. 9 along with FIG. 6, the electrostatic protection part 50 may be formed in various sizes.

Referring to FIG. 6, the first pattern 511 may be formed to have a first length L1 in the horizontal direction. The second pattern 512 may be formed to have a second length L2 in the vertical direction. The fifth pattern 521 may be formed to have a third length L3 in the horizontal direction. The sixth pattern 522 may be formed to have a fourth length L4 in the vertical direction. The first length L1 and the third length L3 may be the same, and the second length L2 and the fourth length L4 may be the same. The first length L1 may correspond to a diameter D of the lens 322, and the third length L3 may correspond to the diameter D of the lens 322. The second length L2 may correspond to the diameter D of the lens 322, and the fourth length L4 may correspond to the diameter D of the lens 322.

Accordingly, it is possible to increase the efficiency of preventing static electricity from entering the light source 321 and to increase the heat dissipation efficiency of heat generated from the light source 321.

Referring to FIG. 9, the first pattern 511 may be formed to have a fifth length L5 in the horizontal direction that is less than the first length L1. The second pattern 512 may be formed to have a sixth length L6 in the vertical direction that is less than the second length L2 The fifth pattern 521 may be formed to have a seventh length L7 in the horizontal direction that is less than the third length L3 The sixth pattern 522 may be formed to have an eighth length L8 in the vertical direction that is less than the fourth length L4. The fifth length L5 and the seventh length L7 may be the same, and the sixth length L6 and the eighth length L8 may be the same. The fifth length L5 may be less than the diameter D of the lens 322, and the seventh length L7 may be less than the diameter D of the lens 322. The sixth length L6 may be less than the diameter D of the lens 322, and the eighth length L8 may be less than the diameter D of the lens 322.

Accordingly, it is possible to increase the adhesion between the reflective sheet 330 (see FIG. 3) and the substrate 310.

Referring back to FIG. 6, static electricity may be generated when the reflective sheet 330 (see FIG. 3) is attached to the substrate 310. The electrostatic protection part 50 may effectively allow static electricity to flow therein from all directions where the reflective sheet 330 (see FIG. 3) is attached.

For example, when the reflective sheet 330 is attached in a first direction A1, static electricity may flow into the first pattern 511 to be grounded through the first ground pattern (511, 512). For example, when the reflective sheet 330 is attached in a second direction A2, static electricity may flow into the second pattern 512 to be grounded through the first ground pattern (511, 512). For example, when the reflective sheet 330 is attached in a third direction A3, static electricity may flow into the fifth pattern 521 to be grounded through the second ground pattern (521, 522). For example, when the reflective sheet 330 is attached in a fourth direction A4, static electricity may flow into the sixth pattern 522 to be grounded through the second ground pattern (521, 522). For example, when the reflective sheet 330 is attached in a fifth direction A5, static electricity may flow into the first tip Ti1 of the first ground pattern (511, 512) to be grounded through the first ground pattern (511, 512). For example, when the reflective sheet 330 is attached in a sixth direction A6, static electricity may flow into the second tip Ti2 of the second ground pattern (521, 522) to be grounded through the second ground pattern (521, 522). For example, when the reflective sheet 330 is attached in a seventh direction A7, static electricity may flow into the second end 511b of the first pattern 511 and/or the fourth end 522b of the sixth pattern 522 and may be grounded through the first ground pattern (511, 512) and/or the second ground pattern (521, 522). For example, when the reflective sheet 330 is attached in an eighth direction A8, static electricity may flow into the fourth end 512b of the second pattern 512 and/or the second end 521b of the fifth pattern 521 and may be grounded through the first ground pattern (511, 512) and/or the second ground pattern (521, 522).

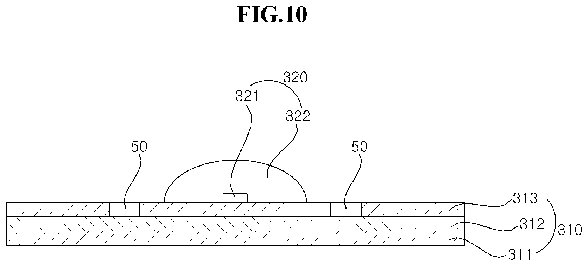

Referring to FIG. 10, the substrate 310 may include an insulating layer 311 and a conductive layer 312 stacked on the insulating layer 311. A line 73 may be formed on the conductive layer 312 to transmit an electrical signal and/or power from an IC package (71, 72, 73), which will be described later, to the light source 321. An electrode pattern for supplying power to the light source 321 may be formed on the conductive layer 312. A ground line for connecting the electrostatic protection part 50 and a ground may be formed on the conductive layer 312.

The substrate 310 may include a protective layer 313 stacked on the conductive layer 312. The protective layer 313 may prevent the substrate 310 from being damaged by an external impact, a chemical reaction such as corrosion, and/or an optical reaction. For example, the protective layer 313 may include a photo solder resist (PSR). The reflective sheet 330 (see FIG. 3) may be attached to the protective layer 313.

The electrostatic protection part 50 may be formed by opening a portion of the protective layer 313 to expose a portion of the conductive layer 312.

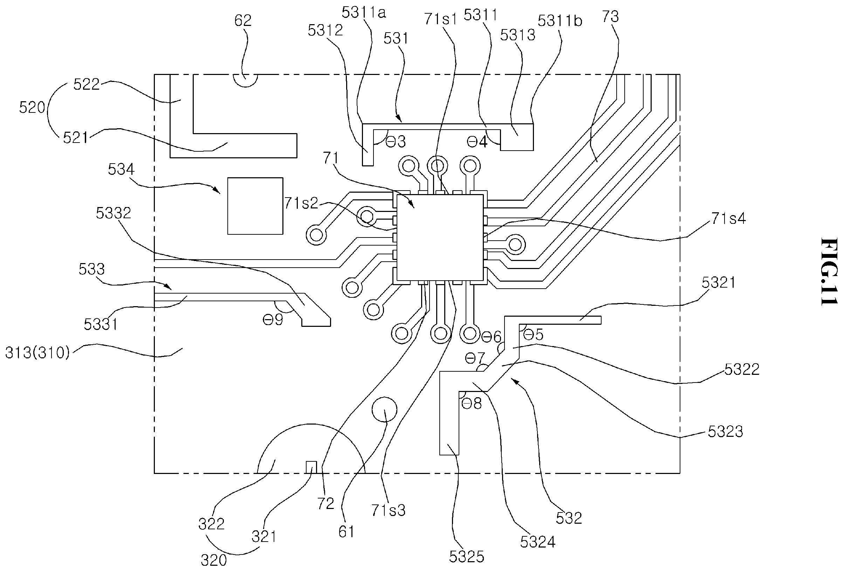

Referring to FIGS. 11 and 14, an integrated circuit (IC) package (71, 72, 73) may be mounted on the substrate 310. The IC package (71, 72, 73) may include an IC chip 71, a connection terminal 72, and a signal line 73. A plurality of electronic circuits and/or elements may be integrated into the IC chip 71. For example, the IC chip 71 may have a quadrilateral shape including first to fourth sides 71s1, 71s2, 72s3, and 72s4. The IC chip 71 may generate a power transmission signal to the light source 321. The connection terminal 72 may electrically connect the IC chip 71 and the substrate 310. The signal line 73 may electrically connect the IC chip 71 and the light source 321, and may transmit an electrical signal and/or power from the IC chip 71 to the light source 321.

The electrostatic protection part 50 may include a third electrostatic protection part 530. The third electrostatic protection part 530 may be disposed adjacent to the IC chip 71. The third electrostatic protection part 530 may be formed by avoiding the connection terminal 72 and/or the signal line 73. The third electrostatic protection part 530 may be formed in various shapes to avoid the connection terminal 72 and/or the signal line 73.

Referring to FIG. 11, a plurality of third electrostatic protection parts 530 may be formed around one IC chip 71.

The third electrostatic protection part 530 may include a fourth ground pattern 531. The fourth ground pattern 531 may be connected to the ground line on the substrate 310. The fourth ground pattern 531 may be positioned in the vicinity of the first side 71s1 of the IC chip 71. The fourth ground pattern 531 may include a first portion 5311 that extends in one direction, a second portion 5312 that extends from a first end 5311a of the first portion 5311 in a direction intersecting a longitudinal direction of the first portion 5311, and a third portion 5313 that extends from a second end 5311b of the first portion 5311 in a direction intersecting the longitudinal direction of the first portion 5311. The first portion 5311 and the second portion 5312 may form a third angle (theta 3). The third angle (theta 3) may be 90 degrees or an acute angle. The first end 5311a may be formed by the intersection of the first portion 5311 and the second portion 5312, and may be formed sharply. The first end 5311a may be referred to as a tip 5311a or a pointy portion 5311a. The first portion 5311 and the third portion 5313 may form a fourth angle (theta 4). The fourth angle (theta 4) may be 90 degrees or an acute angle. The second end 5311b may be formed by the intersection of the first portion 5311 and the third portion 5313, and may be formed sharply. The second end 5311b may be referred to as a tip 5311b or a pointy portion 5311b. Static electricity may be more easily guided to the fourth ground pattern 531 via the pointy portions 5311a and 5311b of the fourth ground pattern 531, and may not be introduced into the IC chip 71. Accordingly, it is possible to prevent damage to the IC chip 71.

The first portion 5311 may be positioned parallel to the first side 71s1 of the IC chip 71, and may vertically overlap the first side 71s1 of the IC chip 71. The second and third portions 5312 and 5313 may extend from the first portion 5311 in a direction toward the IC chip 71. The second portion 5312 may extend further than the third portion 5313. A thickness of the third portion 5313 may be greater than a thickness of the second portion 5312. In this case, the thickness may refer to the thickness in the longitudinal direction of the first portion 5311.

Accordingly, the fourth ground pattern 531 may be positioned closer to the IC chip 71 by avoiding the signal lines 73 near the IC chip 71, and may prevent static electricity from being introduced into the IC chip 71. Thus, it is possible to prevent damage to the IC chip 71 and to effectively dissipate heat generated from the IC chip 71.

The third electrostatic protection part 530 may include a fifth ground pattern 532. The fifth ground pattern 532 may be connected to the ground line on the substrate 310. The fifth ground pattern 532 may be positioned in the vicinity of the third side 71s3 of the IC chip 71. A first portion 5321 of the fifth ground pattern 532 may extend in one direction. The first portion 5321 of the fifth ground pattern 532 may extend in a direction parallel to the third side 71s3 of the IC chip 71, and may not vertically overlap the IC chip 71. The first portion 5321 of the fifth ground pattern 532 may vertically overlap the signal line 73 extending from the fourth side 71s4 of the IC chip 71. A second portion 5322 of the fifth ground pattern 532 may extend from a first end of the first portion 5321. A first end of the second portion 5322 may be connected to the first end of the first portion 5321. The second portion 5322 may extend in a direction intersecting a longitudinal direction of the first portion 5321. The second portion 5322 may form a fifth angle (theta 5) with the first portion 5321. The fifth angle (theta 5) may be approximately 90 degrees. The second portion 5322 may extend from the first portion 5321 in a direction away from the IC chip 71, and may be parallel to the signal line 73 extending from the third side 71s3 of the IC chip 71. A third portion 5323 of the fifth ground pattern 532 may extend from a second end of the second portion 5322. A first end of the third portion 5323 may be connected to the second end of the second portion 5322. The third portion 5323 may extend in a direction intersecting both a longitudinal direction of the second portion 5322 and the longitudinal direction of the first portion 5321. The third portion 5323 may form a sixth angle (theta 6) with the second portion 5322. The sixth angle (theta 6) may be an obtuse angle. A fourth portion 5324 of the fifth ground pattern 532 may extend from a second end of the third portion 5323. A first end of the fourth portion 5324 may be connected to the second end of the third portion 5323. The fourth portion 5324 may extend in a direction intersecting a longitudinal direction of the third portion 5323, and may extend in a direction parallel to the longitudinal direction of the first portion 5321. The fourth portion 5324 may form a seventh angle (theta 7) with the third portion 5323. The seventh angle (theta 7) may be an obtuse angle. A fifth portion 5325 of the fifth ground pattern 532 may extend from a second end of the fourth portion 5324. The fifth portion 5325 may extend in a direction intersecting a longitudinal direction of the fourth portion 5324. The fifth portion 5325 may form an eighth angle (theta 8) with the fourth portion 5324. The eighth angle (theta 8) may be approximately 90 degrees. The fifth portion 5325 may extend from the second end of the fourth portion 5324 in a direction away from the IC chip 71. The fifth portion 5324 may be adjacent to the light assembly 320 that is adjacent to the IC chip 71. The fifth portion 5324 may be adjacent to the first test point 61 of the light assembly 320 adjacent to the IC chip 71. In other words, the fifth portion 5324 may function as the first electrostatic protection part 510 of the light assembly 320 adjacent to the IC chip 713.

Accordingly, the fifth ground pattern 532 may be positioned closer to the IC chip 71 by avoiding the signal lines 73 near the IC chip 71, and may prevent static electricity from being introduced into the IC chip 71. Thus, it is possible to prevent damage to the IC chip 71 and to effectively dissipate heat generated from the IC chip 71. In addition, as the fifth ground pattern 532 prevents static electricity from being introduced into the light assembly 320 adjacent to the IC chip 71, it is possible to prevent damage to the light source 321 and to effectively dissipate heat generated from the light source 321.

The third electrostatic protection part 530 may include a sixth ground pattern 533. The sixth ground pattern 533 may be connected to the ground line on the substrate 310. The sixth ground pattern 533 may be positioned in the vicinity of the second side 71s2 of the IC chip 71. A first portion 5331 of the sixth ground pattern 533 may extend in one direction. The first portion 5331 may extend in a direction parallel to the longitudinal direction of the first portion 5311 of the fourth ground pattern 531. A second portion 5332 of the sixth ground pattern 533 may extend from a first end of the first portion 5331 in a direction toward the IC chip 71. The second portion 5332 may extend in a direction intersecting the first portion 5331. The second portion 5332 may form an obtuse angle (theta 9) with the first portion 5331. The second portion 5332 may be formed to be thicker than the first portion 5331.

Accordingly, the sixth ground pattern 533 may be positioned closer to the IC chip 71 by avoiding the signal lines 73 near the IC chip 71, and may prevent static electricity from being introduced into the IC chip 71. Thus, it is possible to prevent damage to the IC chip 71 and to effectively dissipate heat generated from the IC chip 71.

The third electrostatic protection part 530 may include a seventh ground pattern 534. The seventh ground pattern 534 may be positioned in the vicinity of the second side 71s2 of the IC chip 71. The seventh ground pattern 534 may have a quadrilateral shape. The seventh ground pattern 534 may be positioned below the second electrostatic protection part 520 that is disposed adjacent to the IC chip 71.

Accordingly, the seventh ground pattern 534 may be positioned closer to the IC chip 71 by avoiding the signal lines 73 near the IC chip 71, and may prevent static electricity from being introduced into the IC chip 71. Thus, it is possible to prevent damage to the IC chip 71 and to effectively dissipate heat generated from the IC chip 71. In addition, as the seventh ground pattern 534 prevents static electricity from being introduced into the light assembly 320 adjacent to the IC chip 71, it is possible to prevent damage to the light source 321 and to effectively dissipate heat generated from the light source 321.

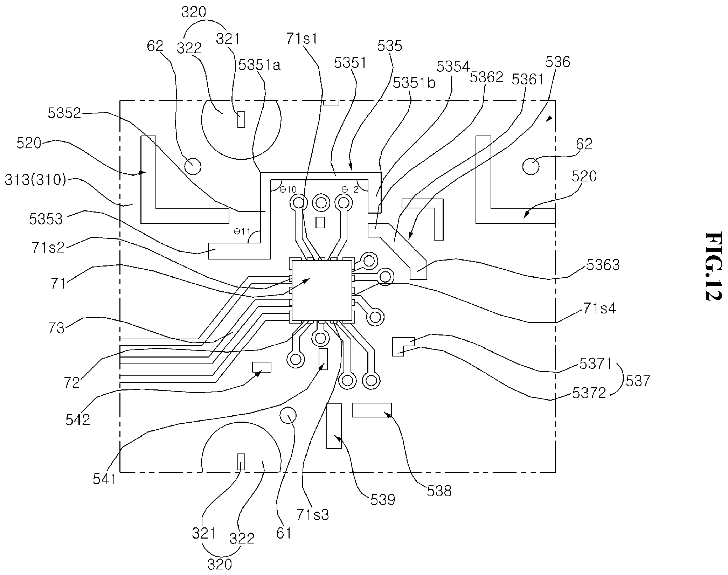

Referring to FIG. 12, a plurality of third electrostatic protection parts 530 may be formed around one IC chip 71.

The third electrostatic protection part 530 may include an eighth ground pattern 535. The eighth ground pattern 535 may be connected to the ground line on the substrate 310. The eighth ground pattern 535 may be positioned in the vicinity of the first side 71s1 of the IC chip 71. The eighth ground pattern 535 may be positioned between a plurality of light assemblies 320 adjacent to the IC chip 71.

The eighth ground pattern 535 may include a first portion 5351 extending parallel to the first side 71s1 of the IC chip 71. A second portion 5352 of the eighth ground pattern 535 may extend from a first end 5351a of the first portion 5351. The second portion 5352 may extend in a direction intersecting a longitudinal direction of the first portion 5351. The second portion 5352 may extend from the first portion 5351 in a direction toward the IC chip 71. The second portion 5352 and the first portion 5351 may form a tenth angle (theta 10). The tenth angle (theta 10) may be approximately 90 degrees or an acute angle. A third portion 5353 of the eighth ground pattern 535 may extend from an end of the second portion 5352. The third portion 5353 may extend in a direction intersecting a longitudinal direction of the second portion 5352, and may extend in a direction parallel to the longitudinal direction of the first portion 5351. The third portion 5353 may extend from the second portion 5352 in a direction away from the IC chip 71. At least a portion of the third portion 5353 may overlap the second electrostatic protection part 520 of the light assembly 320 adjacent to the IC chip 71. The third portion 5353 and the second portion 5352 may form an eleventh angle (theta 11). The eleventh angle (theta 11) may be approximately 90 degrees or an acute angle. A fourth portion 5354 of the eighth ground pattern 535 may extend from a second end 5351b of the first portion 5351. The fourth portion 5354 may extend in a direction intersecting the longitudinal direction of the first portion 5351. The fourth portion 5354 and the first portion 5351 may form a twelfth angle (theta 12). The twelfth angle (theta 12) may be approximately 90 degrees or an acute angle. The fourth portion 5354 may face the second portion 5352, and may be formed to be shorter than the second portion 5352. A plurality of signal lines 73 may be positioned in an area of the substrate 310 surrounded by the first portion 5351, the second portion 5352, and the fourth portion 5354.

The third electrostatic protection part 530 may include a ninth ground pattern 536. The ninth ground pattern 536 may be connected to the ground line on the substrate 310. The ninth ground pattern 536 may be positioned in the vicinity of a vertex formed by the intersection of the first side 71s1 and the fourth side 71s4 of the IC chip 71. The ninth ground pattern 536 may include a first portion 5361 extending in one direction. The first portion 5361 may extend in a direction intersecting both a longitudinal direction of the first side 71s1 and a longitudinal direction of the fourth side 71s4 of the IC chip 71. A second portion 5362 of the ninth ground pattern 536 may extend from a first end of the first portion 5361, and a third portion 5363 of the ninth ground pattern 536 may extend from a second end of the first portion 5361. The second portion 5362 may extend in a direction parallel to the longitudinal direction of the first side 71s1. The third portion 5363 may extend in a direction parallel to the longitudinal direction of the fourth side 71s4. The first portion 5361 and the second portion 5362 may form an obtuse angle. The first portion 5361 and the third portion 5363 may form an obtuse angle.

The third electrostatic protection part 530 may include a tenth ground pattern 537. The tenth ground pattern 537 may be connected to the ground line on the substrate 310. The ninth ground pattern 536 may be positioned in the vicinity of a vertex formed by the intersection of the fourth side 71s4 and the third side 71s3 of the IC chip 71. The tenth ground pattern 537 may include a first portion 5371 that extends in the longitudinal direction of the fourth side 71s4, and a second portion 5372 that extends from a first end of the first portion 5371 and extends in a longitudinal direction of the third side 71s3. The first portion 5371 and the second portion 5372 may form approximately 90 degrees or an acute angle.

The third electrostatic protection part 530 may include an eleventh ground pattern 538, a twelfth ground pattern 539, and a thirteenth ground pattern 541. The eleventh to thirteenth ground patterns 538, 539, and 540 may each be connected to the ground line on the substrate 310. The eleventh to thirteenth ground patterns 538, 539, and 540 may be positioned in the vicinity of the third side 71s3 of the IC chip 71. The eleventh ground pattern 538 may be formed in the shape of a bar extending in the longitudinal direction of the third side 71s3. The twelfth and thirteenth ground patterns 539 and 541 may be formed in the shape of a bar extending in the longitudinal direction of the fourth side 71s4. The thirteenth ground pattern 541 may be located closer to the IC chip 71 than the twelfth ground pattern 539. The thirteenth ground pattern 541 may be positioned between a plurality of signal lines 73 extending from the third side 71s3 of the IC chip 71. The thirteenth ground pattern 541 may be formed to be shorter and thinner than the twelfth ground pattern 539. The twelfth ground pattern 539 may be adjacent to the light assembly 320 that is adjacent to the IC chip 71. The twelfth ground pattern 539 may be adjacent to the first test point 61 of the light assembly 320 adjacent to the IC chip 71. That is, the twelfth ground pattern 539 may function as the first electrostatic protection part 510 of the light assembly 320 adjacent to the IC chip 71.

The third electrostatic protection part 530 may include a fourteenth ground pattern 542. The fourteenth ground pattern 542 may be connected to the ground line on the substrate 310. The fourteenth ground pattern 542 may be positioned in the vicinity of a vertex where the second side 71s2 and the third side 71s3 of the IC chip 71 meet. The fourteenth ground pattern 542 may extend in the longitudinal direction of the third side 71s3, and may be formed to be shorter and thinner than the eleventh ground pattern 538. The fourteenth ground pattern 542 may be positioned between the signal line extending from the second side 71s2 and the signal line 73 extending from the third side 71s3.

Accordingly, the eighth to fourteenth ground patterns 535, 536, 537, 538, 539, 541, and 542 may be positioned closer to the IC chip 71 by avoiding the signal lines 73 near the IC chip 71, and may prevent static electricity from being introduced into the IC chip 71. Thus, it is possible to prevent damage to the IC chip 71 and to effectively dissipate heat generated from the IC chip 71.

Referring to FIG. 13, a plurality of third electrostatic protection parts 530 may be formed around one IC chip 71.

The third electrostatic protection part 530 may include a fifteenth ground pattern 543. The fifteenth ground pattern 543 may be connected to the ground line on the substrate 310. The fifteenth ground pattern 543 may be positioned in the vicinity of the first side 71s1 of the IC chip 71 and a vertex where the first side 71s1 and the second side 71s2 meet.

The fifteenth ground pattern 543 may include a first portion 5431 extending in a longitudinal direction of the second side 71s2. The first portion 5431 may not horizontally overlap the IC chip 71. The first portion 5431 may horizontally overlap signal lines 73 extending from the first side 71s1 of the IC chip 71. A second portion 5432 of the fifteenth ground pattern 543 may extend from a first end of the first portion 5431. The second portion 5432 may extend in a direction intersecting a longitudinal direction of the first portion 5431. The first portion 5431 and the second portion 5432 may form approximately 90 degrees. The second portion 5432 may extend from the first end of the first portion 5431 in a direction away from the IC chip 71. The second portion 5432 may vertically overlap signal lines 73 extending from the second side 71s2 of the IC chip 71. A third portion 5433 of the fifteenth ground pattern 543 may extend from a second end of the first portion 5431. The third portion 5433 may extend in a direction intersecting the longitudinal direction of the first portion 5431. The third portion 5433 may extend to form an obtuse angle with respect to the first portion 5431. A fourth portion 5434 of the fifteenth ground pattern 543 may extend from an end of the third portion 5433, and may extend in a longitudinal direction of the first side 71s1. The fourth portion 5434 and the third portion 5433 may form an obtuse angle. The signal lines 73 extending from the first side 71s1 may be positioned in an area of the substrate 310 surrounded by the first portion 5431, the third portion 5433, and the fourth portion 5434.

The third electrostatic protection part 530 may include a sixteenth ground pattern 544. The sixteenth ground pattern 544 may be connected to the ground line on the substrate 310. The sixteenth ground pattern 544 may be positioned in the vicinity of the third side 71s3 of the IC chip 71.

A first portion 5441 of the sixteenth ground pattern 544 may extend in a longitudinal direction of the third side 71s3. A second portion 5442 of the sixteenth ground pattern 544 may be connected to a first end of the first portion 5441, and may have a quadrilateral shape that is thicker than the first portion 5441. The second portion 5442 may extend toward the third side 71s3. A third portion 5443 of the sixteenth ground pattern 544 may extend from a portion of the second portion 5442 toward the third side 71s3. The third portion 5443 may have a triangular shape whose width decreases from the second portion 5442 toward the third side 71s3. A fourth portion 5444 of the sixteenth ground pattern 544 may be connected to a vertex of the third portion 5443, and may extend from the vertex of the third portion 5443 toward the third side 71s3. The fourth portion 5443 may extend in a longitudinal direction of the second side 71s1. The fourth portion 5443 may be positioned between a plurality of signal lines 73 extending from the third side 71s3. A fifth portion 5445 of the sixteenth ground pattern 544 may extend from a portion of the second portion 5442 toward the third side 71s3, and may face the third portion 5443. The signal line 73 extending from the third side 71s3 may be positioned in an area of the substrate 310 surrounded by the second portion 5442, the third portion 5443, the fourth portion 5444, and the fifth portion 5445.

Accordingly, the fifteenth and sixteenth ground patterns 543 and 544 may be positioned closer to the IC chip 71 by avoiding the signal lines 73 near the IC chip 71, and may prevent static electricity from being introduced into the IC chip 71. Thus, it is possible to prevent damage to the IC chip 71 and to effectively dissipate heat generated from the IC chip 71.

Referring to FIG. 14, when there is not enough space for the third electrostatic protection part 530 due to a plurality of signal lines 73 densely arranged around one IC chip 71, a single third electrostatic protection part 530 may be formed near one IC chip 71.

The third electrostatic protection part 530 may include a seventeenth ground pattern 545. The seventeenth ground pattern 545 may be connected to the ground line on the substrate 310. The seventeenth ground pattern 545 may be positioned in the vicinity of any one of the plurality of sides 71s1, 71s2, 71s3, and 71s4 of the IC chip 71. For example, the seventeenth ground pattern 545 may be positioned in the vicinity of the third side 71s3.

The seventeenth ground pattern 545 may include a first portion 5451 elongated in a longitudinal direction of the third side 71s3. The first portion 5451 may have a length that is three or four times a width of the IC chip 71. The first portion 5451 may vertically overlap the signal line 73 extending from the second side 71s2, and may vertically overlap the signal line 73 extending from the fourth side 71s4. The first portion 5451 may have a thickness half (1/2) or close to half the width of the IC chip 71. A second portion 5452 of the seventeenth ground pattern 545 may extend from a portion of the first portion 5451 toward the IC chip 71. A combined thickness of the first portion 5451 and the second portion 5452 may be equal to or greater than half the width of the IC chip 71.

As such, when there is not enough space for the third electrostatic protection part 530 due to the densely arranged signal lines 73, by using a single ground pattern with the maximum thickness and length, it is possible to prevent static electricity from being introduced into the IC chip 71 and to effectively dissipate heat generated from the IC chip 71.

As described above, the third electrostatic protection part 530 may be provided in various shapes and numbers depending on the density of the signal lines 73 around the IC chip 71.

Referring to FIGS. 1 to 14, a display device may include: a display panel 10; a frame 70 disposed behind the display panel 10; a substrate 310 disposed between the display panel 10 and the frame 70 and coupled to the frame 70; a light source 321 mounted on one surface of the substrate 310; and an electrostatic protection part 50 formed on the one surface of the substrate 310, the electrostatic protection part 50 including a first electrostatic protection part 510 disposed adjacent to the light source 321. The first electrostatic protection part 510 may include: a first pattern 511 extending in one direction; and a second pattern 512 connected to the first pattern 511 and extending in a direction intersecting the one direction.

The first pattern 511 may include: a first end 511a; and a second end 511b located on an opposite side of the first end 511a in the one direction, the second end 511b being closer to the light source 321 than the first end 511a. The second pattern 512 may be connected to the first end 511a of the first pattern 511.

The first pattern 511 may include: a first end 511a; and a second end 511b located on an opposite side of the first end 511a in the one direction, the second end 511b being closer to the light source 321 than the first end 511a. The second pattern 512 may include: a third end 512a connected to the first end 511a of the first pattern 511; and a fourth end 512b located on an opposite side of the third end 512a in the extension direction of the second pattern 512. The first electrostatic protection part 510 may include: a third pattern 513 formed at the second end 511b of the first pattern 511; and a fourth pattern 514 formed at the fourth end 512b of the second pattern 512. The third pattern 513 and the fourth pattern 514 may each include at least one tip or pointy portion.

The third pattern 513 and the fourth pattern 514 may each be a triangular pattern including three tips (Ti3, Ti4, Ti5, Ti6, Ti7, Ti8).

The electrostatic protection part 50 may include: a second electrostatic protection part 520 that is adjacent to the light source 321 and disposed opposite the first electrostatic protection part 510 with respect to the light source 321.

The second electrostatic protection part 520 may include: a fifth pattern 521 extending in the one direction and disposed so as not to vertically overlap the first pattern 511; and a sixth pattern 522 connected to the fifth pattern 521, extending in a direction intersecting the one direction, and disposed so as not to horizontally overlap the second pattern 512.

The second electrostatic protection part 520 may have a bar shape extending in a direction parallel to the extension direction of the first pattern 511 or a bar shape extending in a direction parallel to the extension direction of the second pattern 512.

The display device may further include: a first test point 61 formed on the substrate 310 and disposed between the light source 321 and the first electrostatic protection part 510; and a second test point 62 formed on the substrate 310 and disposed between the light source 321 and the second electrostatic protection part 520.

The first test point 61 may be located on an imaginary straight line (AL) connecting the light source 321 and an intersection of the first pattern 511 and the second pattern 512. The second test point 62 may be located on an imaginary straight line (AL) connecting the light source 321 and an intersection of the fifth pattern 521 and the sixth pattern 522.

The substrate 310 may include: an insulating layer 311; a conductive layer 312 stacked on the insulating layer 311 and on which an electrode pattern is formed; and an insulating protective layer 313 stacked on the conductive layer 312. The electrostatic protection part 50 may be formed by opening a portion of the protective layer 313.

The display device may further include: a hemispherical lens 322 fixed to the substrate 310 and covering the light source 321; and a reflective sheet 330 coupled to the one surface of the substrate 310 and having a hole 331 through which the light source 321 and the lens 322 pass. A length of the first patten 511 in the one direction may be equal to or greater than a diameter of the lens 322, and a length of the second pattern 512 in the extension direction may be equal to or greater than the diameter of the lens 322.

The display device may further include: a hemispherical lens 322 fixed to the substrate 310 and covering the light source 321; and a reflective sheet 330 coupled to the one surface of the substrate 310 and having a hole 331 through which the light source 321 and the lens 322 pass; and a test point 61, 62 formed between the light source 321 and the electrostatic protection part 50, and disposed outside the lens 322. A length of the first pattern 511 in the one direction may be less than a diameter of the lens 321 and greater than a diameter of the test point 61, 62, and a length of the second pattern 512 in the extension direction may be less than the diameter of the lens 321 and greater than the diameter of the test point 61, 62.

The light source 321 may be provided in plurality. The display device may further include: a circuit unit mounted on the substrate 310, the circuit unit including a control integrated circuit (IC) chip 71 that is disposed between the plurality of light sources 321 and configured to control a current applied to each of the plurality of light sources 321, and a signal line 73 that extends from the IC chip 71 so as to transmit a signal from the IC chip 71 to each of the plurality of light sources 321; and a third electrostatic protection part 530 formed on the substrate 310, disposed adjacent to the IC chip 71, and formed by avoiding the signal line 73.

Referring to FIGS. 1 to 14, a backlight unit (30, 40) may include: a substrate 310; a light assembly 320 including a light source 321 that is mounted on one surface of the substrate 310 and a lens 322 that is fixed to the substrate 310 and covers the light source 321; an electrostatic protection part 50 mounted on the one surface of the substrate 310, the electrostatic protection part 50 including a first electrostatic protection part 510 that is positioned adjacent to the light assembly 320 and a second electrostatic protection part 520 that is positioned adjacent to the light assembly 320 and disposed opposite the first electrostatic protection part with respect to the light assembly; and a reflective sheet 330 attached to the one surface of the substrate 310 and having a hole through which the light assembly 320 passes. The first electrostatic protection part 510 may include: a first tip Ti1 formed at a position spaced apart from the light source 320 by a first distance; a first pattern 511 extending in one direction from the first tip Ti1; and a second pattern 512 extending from the first tip Ti1 in a direction intersecting the extension direction of the first pattern 511. The second electrostatic protection part 520 may include: a second tip Ti2 formed at a position spaced apart from the light source 321 by the first distance and disposed opposite the first tip Ti1 with respect to the light source 321; a third pattern 521 extending from the second tip Ti2 in a direction parallel to the extension direction of the first pattern 511 and disposed so as not to vertically overlap the first pattern 511; and a fourth pattern 522 extending from the second tip Ti2 in a direction parallel to the extension direction of the second pattern 512 and disposed so as not to horizontally overlap the second pattern 512.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings, and a configuration "B" described in another embodiment of the disclosure and the drawings may be combined with each other. Namely, although the combination between the configurations is not directly described, the combination is possible except in the case where it is described that the combination is impossible.

The above detailed description is to be construed in all aspects as illustrative and not restrictive. The scope of the present disclosure should be determined by reasonable interpretation of the appended claims, and all changes coming within the equivalency range of the present disclosure are intended to be embraced in the scope of the present disclosure.

## Claims

1. A display device comprising:
a display panel;
a frame disposed behind the display panel;
a substrate disposed between the display panel and the frame and coupled to the frame;
a light source mounted on one surface of the substrate; and
an electrostatic protection part formed on the one surface of the substrate, the electrostatic protection part comprising a first electrostatic protection part disposed adjacent to the light source,
wherein the first electrostatic protection part comprises:
a first pattern extending in one direction; and
a second pattern connected to the first pattern and extending in a direction intersecting the one direction.

2. The display device of claim 1, wherein the first pattern comprises:
a first end; and
a second end located on an opposite side of the first end in the one direction, the second end being closer to the light source than the first end, and
wherein the second pattern is connected to the first end of the first pattern.

3. The display device of claim 1, wherein the first pattern comprises:
a first end; and
a second end located on an opposite side of the first end in the one direction, the second end being closer to the light source than the first end,
wherein the second pattern comprises:
a third end connected to the first end of the first pattern; and
a fourth end located on an opposite side of the third end in the extension direction of the second pattern,
wherein the first electrostatic protection part comprises:
a third pattern formed at the second end of the first pattern; and
a fourth pattern formed at the fourth end of the second pattern, and
wherein the third pattern and the fourth pattern each include at least one tip or pointy portion.

4. The display device of claim 3, wherein the third pattern and the fourth pattern are each a triangular pattern including three tips.

5. The display device of claim 1, wherein the electrostatic protection part comprises a second electrostatic protection part that is adjacent to the light source and disposed opposite the first electrostatic protection part with respect to the light source.

6. The display device of claim 5, wherein the second electrostatic protection part comprises:
a fifth pattern extending in the one direction and disposed so as not to vertically overlap the first pattern; and
a sixth pattern connected to the fifth pattern, extending in a direction intersecting the one direction, and disposed so as not to horizontally overlap the second pattern.

7. The display device of claim 5, wherein the second electrostatic protection part has a bar shape extending in a direction parallel to the extension direction of the first pattern or a bar shape extending in a direction parallel to the extension direction of the second pattern.

8. The display device of claim 5, further comprising:
a first test point formed on the substrate and disposed between the light source and the first electrostatic protection part; and
a second test point formed on the substrate and disposed between the light source and the second electrostatic protection part.

9. The display device of claim 8, wherein:
the first test point is located on an imaginary straight line connecting the light source and an intersection of the first pattern and the second pattern; and
the second test point is located on an imaginary straight line connecting the light source and an intersection of the fifth pattern and the sixth pattern.

10. The display device of claim 1, wherein the substrate comprises:
an insulating layer;
a conductive layer stacked on the insulating layer and on which an electrode pattern is formed; and
an insulating protective layer stacked on the conductive layer, and
wherein the electrostatic protection part is formed by opening a portion of the protective layer.

11. The display device of claim 1, further comprising:
a hemispherical lens fixed to the substrate and covering the light source; and
a reflective sheet coupled to the one surface of the substrate and having a hole through which the light source and the lens pass,
wherein a length the first patten in the one direction is equal to or greater than a diameter of the lens, and
wherein a length of the second pattern in the extension direction is equal to or greater than the diameter of the lens.

12. The display device of claim 1, further comprising:
a hemispherical lens fixed to the substrate and covering the light source;
a reflective sheet coupled to the one surface of the substrate and having a hole through which the light source and the lens pass; and
a test point formed between the light source and the electrostatic protection part, and disposed outside the lens,
wherein a length of the first pattern in the one direction is less than a diameter of the lens and greater than a diameter of the test point, and
wherein a length of the second pattern in the extension direction is less than the diameter of the lens and greater than the diameter of the test point.

13. The display device of claim 1, wherein the light source is provided in plurality,
wherein the display device further comprises:
a circuit unit mounted on the substrate, the circuit unit comprising a control integrated circuit (IC) chip that is disposed between the plurality of light sources and configured to control a current applied to each of the plurality of light sources, and a signal line that extends from the IC chip so as to transmit a signal from the IC chip to each of the plurality of light sources; and
a third electrostatic protection part formed on the substrate, disposed adjacent to the IC chip, and formed by avoiding the signal line.

14. A backlight unit comprising:
a substrate;
a light assembly comprising a light source that is mounted on one surface of the substrate, and a lens that is fixed to the substrate and covers the light source;
an electrostatic protection part mounted on the one surface of the substrate, the electrostatic protection part comprising a first electrostatic protection part that is positioned adjacent to the light assembly, and a second electrostatic protection part that is positioned adjacent to the light assembly and disposed opposite the first electrostatic protection part with respect to the light assembly; and
a reflective sheet attached to the one surface of the substrate and having a hole through which the light assembly passes,
wherein the first electrostatic protection part comprises:
a first tip formed at a position spaced apart from the light source by a first distance;
a first pattern extending in one direction from the first tip; and
a second pattern extending from the first tip in a direction intersecting the extension direction of the first pattern, and
wherein the second electrostatic protection part comprises:
a second tip formed at a position spaced apart from the light source by the first distance and disposed opposite the first tip with respect to the light source;
a third pattern extending from the second tip in a direction parallel to the extension direction of the first pattern and disposed so as not to vertically overlap the first pattern; and
a fourth pattern extending from the second tip in a direction parallel to the extension direction of the second pattern and disposed so as not to horizontally overlap the second pattern.
